# EUROPEAN PATENT SPECIFICATION

(11) **EP 2 420 827 B1**
(45) Date of publication and mention of the grant of the patent: **07.06.2017**
(21) Application number: 09843214.9
(22) Date of filing: 16.04.2009
(51) Int. Cl.: G01N 27/30

(54) **A METHOD OF MANUFACTURING A PRUSSIAN BLUE ELECTRODE**
VERFAHREN ZUR HERSTELLUNG EINER PREUSSISCHBLAU-ELEKTRODE
PROCÉDÉ DE FABRICATION D'UNE ÉLECTRODE DE BLEU DE PRUSSE

(30) Priority: 15.04.2009 CN 200910307574
(43) Date of publication of application: 22.02.2012
(73) Proprietor: Nanjing University of Technology, Nanjing, Jiangsu 210009 (CN)
(72) Inventor: JIN, Wanqin, Jiangsu 210009 (CN); CHU, Zhenyu, Jiangsu 210009 (CN); LIU, Yu, Jiangsu 210009 (CN); XU, Nanping, Jiangsu 210009 (CN)
(74) Representative: Kramer Barske Schmidtchen Patentanwälte PartG mbB
(86) International application number: PCT/CN2009/071317
(87) International publication number: WO 2010/118580

(56) References cited:
- CN-A- 101 105 471
- CN-A- 101 532 979
- JP-A- 2005 298 753
- JP-A- 2007 257 854
- RICCI F ET AL: "Sensor and biosensor preparation, optimisation and applications of Prussian Blue modified electrodes", BIOSENSORS AND BIOELECTRONICS, ELSEVIER BV, NL, vol. 21, no. 3, 15 September 2005 (2005-09-15), pages 389-407, XP027619410, ISSN: 0956-5663 [retrieved on 2005-09-15]
- HU Y L ET AL: "Photochemical synthesis of Prussian blue film from an acidic ferricyanide solution and application", ELECTROCHEMISTRY COMMUNICATIONS, ELSEVIER, AMSTERDAM, NL, vol. 7, no. 12, 1 December 2005 (2005-12-01), pages 1252-1256, XP027706525, ISSN: 1388-2481 [retrieved on 2005-12-01]
- XIAN Y ET AL: "Preparation of poly(vinylpyrrolidone)-protected Prussian blue nanoparticles-modified electrode and its electrocatalytic reduction for hemoglobin", ANALYTICA CHIMICA ACTA, ELSEVIER, AMSTERDAM, NL, vol. 546, no. 2, 8 August 2005 (2005-08-08), pages 139-146, XP027730953, ISSN: 0003-2670 [retrieved on 2005-08-08]
- RICCI F ET AL: "PRUSSIAN BLUE BASED SCREEN PRINTED BIOSENSORS WITH IMPROVED CHARACTERISTICS OF LONG-TERM LIFETIME AND PH STABILITY", BIOSENSORS AND BIOELECTRONICS, ELSEVIER BV, NL, vol. 18, no. 2/03, 1 March 2003 (2003-03-01), pages 165-174, XP001153799, ISSN: 0956-5663, DOI: 10.1016/S0956-5663(02)00169-0
- CHANG H ET AL: "Process optimization and material properties for nanofluid manufacturing", THE INTERNATIONAL JOURNAL OF ADVANCED MANUFACTURING TECHNOLOGY, SPRINGER, BERLIN, DE, vol. 34, no. 3-4, 30 May 2006 (2006-05-30) , pages 300-306, XP019536742, ISSN: 1433-3015

## Description

### Technical Field

This invention relates to a method to prepare a Prussian blue modified electrode. The prepared electrode can be applied to the detection of hydrogen peroxide, glucose, blood sugar, cholesterol, amino acid, and alcohol, etc., used in chemical engineering, food safety, and medicine and sanitation.

### Background of the Invention

Since early 18^{th} century when Prussian blue was accidentally discovered in Germany, its various properties have been widely studied. It has the property of electro-catalysis owing to Fe element of different valence states present in its structure. With scientific and technological development, ever greater emphasis has been given to detection of living substances, accordingly, application of biosensors has been attracted more and more attention. Because of its property of electro-catalysis, Prussian blue has been widely used in preparation of electrodes in biosensors.

F. Ricci, G. Palleschi Sensor and biosensor preparation, optimisation and applications of Prussian blue modified electrodes. Biosensors and Bioelectronics 21 (2005) 389-407 and Yuezhong Xian et al Preparation of poly(vinylpyrrolidone)-protected Prussian blue nanoparticles-modified electrode and its electrocatalytic reduction for hemoglobin. Analytica Chimica Acta 546 (2005) 139-146 both describe methods of manufacturing Prussian blue electrodes.

Being an important index of blood sugar, the content of glucose can be evaluated to judge the health. As a byproduct of oxidation of glucose, hydrogen peroxide is often applied to reflect the content of glucose. In addition, hydrogen peroxide itself is an index to be controlled in foodstuff, such as milk. Therefore, detection of hydrogen peroxide is very meaningful and important. Hydrogen peroxide can accept electrons on the surface of Prussian blue, and then, be reduced to hydroxide ion, hence, the change of the current can be detected. Compared with traditional electrodes, Prussian blue modified electrode is advantageous by its low detection electric potential. Under low potential, current interference generated by oxidation of ascorbic acid and uric acid can be avoided, thereby greatly enhancing its sensitivity. After combining with various oxidizing enzymes, a Prussian blue modified electrode can also be used for detection of cholesterol system and amino acid system, etc. Current methods to prepare a Prussian blue modified electrode are mainly an electro-deposition method and a self-assembly method. However, both have inherent disadvantages. The electro-deposition method is not applicable to large scale production, while the self-assembly method requires pre-coating of a layer of polyelectrolyte on the electrode surface, which may increase thickness of film and result in reduced electron conduction speed.

### Summary of the Invention

The purpose of this invention is to overcome the disadvantages of existing technologies and provide a simple and controllable method to prepare a Prussian blue modified electrode. This new method is applicable to detection of hydrogen peroxide, glucose, blood sugar, cholesterol, amino acid, and alcohol, etc., while being applied in chemical engineering, food safety, and medicine and sanitation. This new method permits simultaneous preparation of many electrodes and can be well used for large scale production.

### Technical scheme of this invention:

A method for manufacturing a Prussian blue modified according to the claims.

As further improvement of this invention, the Prussian blue modified electrode obtained in step 4 is dried in an oven, to achieve better results. Preferred drying time is 30-60 min.

### Beneficial effects

This invention provides a Prussian blue modified electrode preparation process based on an aerosol deposition method. Utilizing bonding interaction between Prussian blue and an electrode, a layer of Prussian blue can be directly deposited on a metal electrode. As a reaction between cation and anion is used to synthesize Prussian blue by electrostatic force, film thickness can be controlled by times of cyclic alternate coating, and nano-scale control of film material and structure is gained. Meanwhile, since the deposition is an adsorption process, deposition time and temperature can affect the thickness of the Prussian blue film deposited on the electrode. The thickness of the Prussian blue film increases with increase of cyclic times, deposition time, and temperature. The method of this invention is simple and economic, and can be applied for simultaneous manufacture of many electrodes.

### Description of drawing figures

Fig. 1 is an atomic force microscope (AFM) image of a Prussian blue modified electrode prepared within 240 min and at 15 °C.
Fig.2 is an atomic force microscope (AFM) image of a Prussian blue modified electrode prepared within 200 min and at 15 °C.

### Preferred embodiments

### Preferred embodiment 1

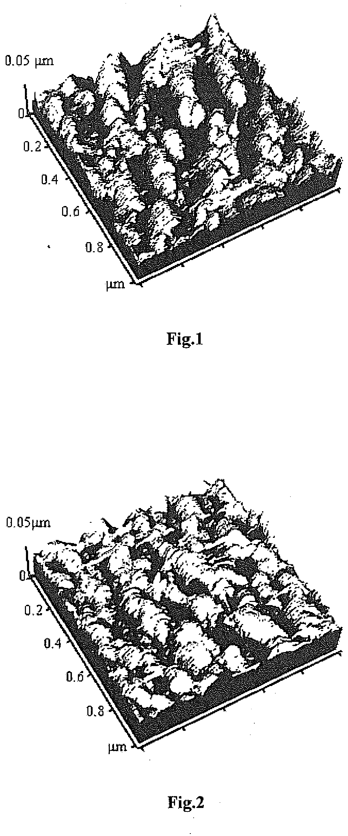

1) Polish support electrode using metallographic abrasive paper to a mirror-like surface. Dip polished electrode in a Piranha solution (mixture of concentrated sulfuric acid with hydrogen peroxide at 7:3) for 30 min, and then wash it with de-ionized water. Finally, place the electrode to ultrasonic cleaning in de-ionized water for 30 min to end pre-treatment.
2) Fix pre-treated electrode in an aerosol deposition box.
3) Prepare KCl water solution with K₄Fe(CN)₆ of concentration 0.01 M, and KCl water solution with FeCl₃ of the same concentration. KCl concentration is 0.5 M. pH value of mixed solution is controlled at about 1.
4) Load prepared K₄Fe(CN)₆ and KCl water solution into ultrasonic atomizer. After the solution is atomized by ultrasonic wave into aerosol, inject it into the aerosol deposition box. Deposition temperature is set to 15 °C. After 240 min, use ultrasonic wave to atomize FeCl₃ and KCl water solution to aerosol and inject it into aerosol deposition box to react for 240 min.
5) Place the electrode in oven at 100 °C for drying for 60min, to yield Prussian blue modified electrode, as shown in Fig. 1.

### Preferred embodiment 2

Compared with preferred embodiment 1, in preferred embodiment 2, ambient temperature (step 4), cation and anion concentrations, and pH value are increased to raise the film thickness.
1) Polish support electrode using metallographic abrasive paper to a mirror-like surface. Dip polished electrode in a Piranha solution (mixture of concentrated sulfuric acid with hydrogen peroxide at 7:3) for 30 min, and then wash it with de-ionized water. Finally, place the electrode to ultrasonic cleaning in de-ionized water for 30 min to end pre-treatment.
2) Fix pre-treated electrode in an aerosol deposition box.
3) Prepare KCl water solution with K₄Fe(CN)₆ of concentration 0.1 M, and KCl water solution with FeCl₃ of the same concentration. KCl concentration is 0.5 M. pH value of mixed solution is controlled at about 4.
4) Load prepared K₄Fe(CN)₆ and KCl mixed water solution into ultrasonic atomizer. After the solution is atomized by ultrasonic wave into aerosol, inject it into the aerosol deposition box. Deposition temperature is set to 35 °C. After 240 min, use ultrasonic wave to atomize FeCl₃ and KCl water solution to aerosol and inject it into aerosol deposition box to react for 240 min.
5) Place the electrode in oven at 100 °C for drying for 60 min, to yield Prussian blue modified electrode.

### Preferred embodiment 3

Compared with preferred embodiment 1, in preferred embodiment 3, time of deposition (step 4) and pH value are increased, and KCl concentration is reduced to increase thickness of Prussian blue film, as shown in characteristic result of Fig. 1.
1) Polish support electrode using metallographic abrasive paper to a mirror-like surface. Dip polished electrode in a Piranha solution (mixture of concentrated sulfuric acid with hydrogen peroxide at 7:3) for 30 min, and then wash it with de-ionized water. Finally, place the electrode to ultrasonic cleaning in de-ionized water for 30 min to end pre-treatment.
2) Fix pre-treated electrode in an aerosol deposition box.
3) Prepare KCl water solution with K₄Fe(CN)₆ of concentration 0.1 M, and KCl water solution with FeCl₃ of the same concentration. KCl concentration is 0.5 M. pH value is controlled at about 7.
4) Load prepared K₄Fe(CN)₆ and KCl water solution into ultrasonic atomizer. After the solution is atomized by ultrasonic wave into aerosol, inject it into the aerosol deposition box. Deposition temperature is set to 15 °C. After 300 min, use ultrasonic wave to atomize FeCl₃ and KCl water solution to aerosol and inject it into aerosol deposition box to react for 300 min.
5) Place the electrode in oven at 100 °C for drying for 60 min, to yield Prussian blue modified electrode, as shown in Fig. 2.

### Preferred embodiment 4

Compared with preferred embodiment 3, in preferred embodiment 4, concentration of first solution and second solution is increased and KCl concentration is reduced (step 3), to increase Prussian blue surface concentration.
1) Polish support electrode using metallographic abrasive paper to a mirror-like surface. Dip polished electrode in a Piranha solution (mixture of concentrated sulfuric acid with hydrogen peroxide at 7:3) for 30 min, and then wash it with de-ionized water. Finally, place the electrode to ultrasonic cleaning in de-ionized water for 30 min to end pre-treatment.
2) Fix pre-treated electrode in an aerosol deposition box.
3) Prepare KCl water solution with K₄Fe(CN)₆ of concentration 2 M, and KCl water solution with FeCl₃ of the same concentration. KCl concentration is 0.1 M. pH value is controlled at about 7.
4) Load prepared K₄Fe(CN)₆ and KCl water solution into ultrasonic atomizer. After the solution is atomized by ultrasonic wave into aerosol, inject it into the aerosol deposition box. Deposition temperature is set to 15 °C. After 300 min, use ultrasonic wave to atomize FeCl₃ and KCl water solution to aerosol and inject it into aerosol deposition box for reaction for 300 min.
5) Place the electrode in oven at 100 °C for drying for 60 min, to yield Prussian blue modified electrode.

### Preferred embodiment 5

Compared with preferred embodiment 4, in preferred embodiment 5, connection time is reduced to 5 min (step 4), step 5) is added, and KCl concentration is reduced, to shorten preparation time not reducing deposition amount of Prussian blue.
1) Polish support electrode using metallographic abrasive paper to a mirror-like surface. Dip polished electrode in a Piranha solution (mixture of concentrated sulfuric acid with hydrogen peroxide at 7:3) for 30 min, and then wash it with de-ionized water. Finally, place the electrode to ultrasonic cleaning in de-ionized water for 30 min to end pre-treatment.
2) Fix pre-treated electrode in an aerosol deposition box.
3) Prepare KCl water solution with K₃Fe(CN)₆ of concentration 2 M, and KCl water solution with (NH₄)₂Fe(SO₄)₂ of the same concentration. KCl concentration is 0.01 M. pH value is controlled at about 4.
4) Load prepared K₃Fe(CN)₆ and KCl water solution into ultrasonic atomizer. After the solution is atomized by ultrasonic wave into aerosol, inject it into the aerosol deposition box. Deposition temperature is set to 15 °C. After 5min, use ultrasonic wave to atomize (NH₄)₂Fe(SO₄)₂ and KCl water solution to aerosol and inject it into aerosol deposition box to react for 5 min.
5) Repeat step 4) for 10 times.
6) Place the electrode in oven at 100 °C for drying for 60 min, to yield Prussian blue modified electrode.

### Preferred embodiment 6

Compared with preferred embodiment 5, in preferred embodiment 6, the number of times of repetition (step 5) is increased to increase the thickness of the Prussian blue film.
1) Polish sub-base electrode using metallographic abrasive paper to a mirror-like surface. Dip polished electrode in a Piranha solution (mixture of concentrated sulfuric acid with hydrogen peroxide at 7:3) for 30 min, and then wash it with de-ionized water. Finally, place the electrode to ultrasonic cleaning in de-ionized water for 30min to end pre-treatment.
2) Fix pre-treated electrode in an aerosol deposition box.
3) Prepare KCl water solution with K₃Fe(CN)₆ of concentration 2 M, and KCl water solution with (NH₄)₂Fe(SO₄)₂ of the same concentration. KCl concentration is 0.01 M. pH value is controlled at about 4.
4) Load prepared K₃Fe(CN)₆ and KCl water solution into ultrasonic atomizer. After the solution is atomized by ultrasonic wave into aerosol, inject it into the aerosol deposition box. Deposition temperature is set to 15 °C. After 5 min, use ultrasonic wave to atomize (NH₄)₂Fe(SO₄)₂ and KCl water solution to aerosol and inject it into aerosol deposition box to react for 5 min.
5) Repeat step 4) for 60 times.
6) Place the electrode in oven at 100 °C for drying for 60 min, to yield Prussian blue modified electrode.

## Claims

1. A method for manufacturing a Prussian blue modified electrode, wherein the following steps are included:
Step 1: carrying out a surface pre-treatment of a support electrode;
Step 2: fixing the pre-treated support electrode in an aerosol deposition box;
Step 3: preparing a first mixture of a first solution and a KCl water solution, as well as a second mixture of a second solution and a KCl water solution, wherein the mixtures have the same concentration, and wherein the first solution is a K₄Fe(CN)₆ or a K₃Fe(CN)₆ solution, the second solution is in case of K₄Fe(CN)₆ a FeCl₃ solution or in case of K₃Fe(CN)₆ a (NH₄)₂Fe(SO₄)₂ solution, both mixtures having a concentration of between 0.01 - 2 M, the KCl concentration of the KCl water solution is between 0.01 - 0.5 M, and the pH value is controlled at 1 - 7;
Step 4: loading the first mixture in an ultrasonic atomizer, where a first aerosol is formed by ultrasonic atomization and then injected into the aerosol deposition box; and loading the second mixture after a period of time in the ultrasonic atomizer so that a second aerosol is formed and injected into the aerosol deposition box to react for some time, to obtain a Prussian blue modified electrode.

2. The method of claim 1, wherein the surface pre-treatment in step 1 includes polishing the support electrode using metallographic abrasive paper to a mirror-like surface; dipping the polished electrode in a Piranha solution for a period of time; washing it with de-ionized water; and performing ultrasonic cleaning in de-ionized water.

3. The method of claim 1, wherein step 4 is repeated a number of times.

4. The method of claim 1, wherein after step 4 the step of drying of the prepared Prussian blue modified electrode in an oven is provided.

5. The method of claim 1, wherein in step 4 the deposition temperature is controlled to be 0 - 100 °C, and the duration of injection of the first aerosol and second aerosol into the deposition box is preferably 1 - 600 min.

6. The method of claim 1, wherein the base material of the support electrode is a metal electrode or sheet metal.

7. The method of claim 3, wherein the repetition is 10 - 60 times.

## Patentansprüche

1. Verfahren zur Herstellung einer Preußischblau-modifizierten Elektrode, das die folgenden Schritte umfasst:
Schritt 1: Durchführen einer Oberflächenvorbehandlung einer Trägerelektrode,
Schritt 2: Fixieren der vorbehandelten Trägerelektrode in einer Aerosolabscheidungskammer,
Schritt 3: Herstellen eines ersten Gemischs aus einer ersten Lösung und einer KCl-Wasser-Lösung sowie eines zweiten Gemischs aus einer zweiten Lösung und einer KCl-Wasser-Lösung, wobei die Gemische die gleiche Konzentration aufweisen und wobei die erste Lösung eine K₄Fe(CN)₆- oder eine K₃Fe(CN)₆-Lösung ist, die zweite Lösung in dem Fall von K₄Fe(CN)₆ eine FeCl₃-Lösung ist oder in dem Fall von K₃Fe(CN)₆ eine (NH₄)₂Fe(SO₄)₂-Lösung ist, wobei beide Gemische eine Konzentration zwischen 0,01 bis 2 M aufweisen, die KCl-Konzentration der KCl-Wasser-Lösung zwischen 0,01 bis 0,5 M liegt und der pH-Wert auf 1 bis 7 eingestellt ist,
Schritt 4: Einbringen des ersten Gemischs in einen Ultraschallzerstäuber, wobei durch eine Ultraschallzerstäubung ein erstes Aerosol gebildet wird und dann in die Aerosolabscheidungskammer injiziert wird, und Einbringen des zweiten Gemischs in den Ultraschallzerstäuber nach einem Zeitraum, so dass ein zweites Aerosol gebildet wird und in die Aerosolabscheidungskammer injiziert wird, so dass es für einige Zeit reagiert, wobei eine Preußischblau-modifizierte Elektrode erhalten wird.

2. Verfahren nach Anspruch 1, bei dem die Oberflächenvorbehandlung in dem Schritt 1 das Polieren der Trägerelektrode unter Verwendung eines metallographischen Schleifpapiers zu einer spiegelartigen Oberfläche, Eintauchen der polierten Elektrode in eine Piranha-Lösung für einen Zeitraum, Waschen der polierten Elektrode mit entionisiertem Wasser und Durchführen einer Ultraschallreinigung in entionisiertem Wasser umfasst.

3. Verfahren nach Anspruch 1, bei dem der Schritt 4 mehrmals wiederholt wird.

4. Verfahren nach Anspruch 1, bei dem nach dem Schritt 4 der Schritt des Trocknens der hergestellten Preußischblau-modifizierten Elektrode in einem Ofen bereitgestellt wird.

5. Verfahren nach Anspruch 1, bei dem im Schritt 4 die Abscheidungstemperatur auf 0 bis 100 °C eingestellt wird und die Dauer des Injizierens des ersten Aerosols und des zweiten Aerosols in die Abscheidungskammer vorzugsweise 1 bis 600 Minuten beträgt.

6. Verfahren nach Anspruch 1, bei dem das Basismaterial der Trägerelektrode eine Metallelektrode oder ein Metallblech ist.

7. Verfahren nach Anspruch 3, bei dem die Wiederholung 10 bis 60 Mal durchgeführt wird.

## Revendications

1. Procédé de fabrication d'une électrode modifiée au bleu de Prusse, dans lequel les étapes suivantes sont incluses :
Étape 1 : réalisation d'un prétraitement de surface d'une électrode de support ;
Étape 2 : fixation de l'électrode de support prétraitée dans une boîte de dépôt d'aérosol ;
Étape 3 : préparation d'un premier mélange d'une première solution et d'une solution aqueuse de KCI, ainsi que d'un second mélange d'une seconde solution et d'une solution aqueuse de KCI, dans lequel les mélanges ont la même concentration, et dans lequel la première solution est une solution de K₄Fe(CN)₆ ou de K₃Fe(CN)₆, la seconde solution est, dans le cas de K₄Fe(CN)₆, une solution de FeCl₃ ou, dans le cas de K₃Fe(CN)₆, une solution de (NH₄)₂Fe(SO₄)₂, l'un et l'autre des mélanges ayant une concentration comprise entre 0,01 et 2 M, la concentration en KCI de la solution aqueuse de KCI est comprise entre 0,01 et 0,5 M, et la valeur de pH est régulée entre 1 et 7 ;
Étape 4 : chargement du premier mélange dans un atomiseur à ultrasons, où un premier aérosol est formé par atomisation par ultrasons puis injecté dans la boîte de dépôt d'aérosol ; et chargement du second mélange après une période de temps dans l'atomiseur à ultrasons de sorte qu'un second aérosol est formé et injecté dans la boîte de dépôt d'aérosol afin de réagir pendant un certain temps, de façon à obtenir une électrode modifiée au bleu de Prusse.

2. Procédé selon la revendication 1, dans lequel le prétraitement de surface à l'étape 1 inclut le polissage de l'électrode de support à l'aide d'un papier abrasif métallographique jusqu'à une surface de type miroir ; l'immersion de l'électrode polie dans un mélange piranha pendant un laps de temps ; son lavage avec de l'eau désionisée ; et l'exécution d'un nettoyage par ultrasons dans de l'eau désionisée.

3. Procédé selon la revendication 1, dans lequel l'étape 4 est répétée un certain nombre de fois.

4. Procédé selon la revendication 1, dans lequel après l'étape 4, l'étape de séchage dans un four de l'électrode modifiée au bleu de Prusse préparée est fournie.

5. Procédé selon la revendication 1, dans lequel, à l'étape 4, la température de dépôt est régulée pour se situer entre 0 et 100 °C, et la durée d'injection du premier aérosol et du second aérosol dans la boîte de dépôt va de préférence de 1 à 600 min.

6. Procédé selon la revendication 1, dans lequel le matériau de base de l'électrode de support est une électrode en métal ou une tôle métallique.

7. Procédé selon la revendication 3, dans lequel la répétition va de 10 à 60 fois.
